(19) Europäisches Patentamt / European Patent Office / Office européen des brevets

(11) **EP 2 016 561 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **07818896.8**

(22) Anmeldetag: **10.10.2007**

(51) Int Cl.:
***G06T 15/20*** (2006.01)

(86) Internationale Anmeldenummer:
**PCT/EP2007/008825**

(87) Internationale Veröffentlichungsnummer:
**WO 2008/043550 (17.04.2008 Gazette 2008/16)**

(54) **VERFAHREN ZUR TEXTURIERUNG VIRTUELLER DREIDIMENSIONALER OBJEKTE**

METHOD FOR TEXTURIZING VIRTUAL THREE-DIMENTIONAL OBJECTS

PROCÉDÉ POUR LA TEXTURATION D'OBJETS VIRTUELS TRIDIMENSIONNELS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.10.2006 DE 102006048241**
**03.07.2007 DE 102007030781**

(43) Veröffentlichungstag der Anmeldung:
**21.01.2009 Patentblatt 2009/04**

(73) Patentinhaber: **GTA Geoinformatik GmbH**
**17033 Neubrandenburg (DE)**

(72) Erfinder: **LIECKFELDT, Peter**
**17235 Neustrelitz (DE)**

(74) Vertreter: **Meissner, Bolte & Partner**
**Anwaltssozietät GbR**
**Widenmayerstrasse 48**
**80538 München (DE)**

(56) Entgegenhaltungen:
**WO-A- 02/19273        DE-A1- 19 920 709**
**JP-A- 11 120 374      US-A1- 2005 128 212**

- **BEKINS D ET AL: "Build-by-Number: Rearranging the Real World to Visualize Novel Architectural Spaces" VISUALIZATION, 2005. VIS 05. IEEE MINNEAPOLIS, MN, USA OCT. 23-28, 2005, PISCATAWAY, NJ, USA, IEEE, 23. Oktober 2005 (2005-10-23), Seiten 143-150, XP010853156 ISBN: 0-7803-9462-3**
- **VANDE VELDE LINDE: "Tele Atlas 3d navigable maps" WORKSHOP ON NEXT GENERATION INTERNET, XX, XX, 21. Juni 2005 (2005-06-21), Seiten 47-50, XP002449676**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Texturierung virtueller dreidimensionaler Objekte, insbesondere virtueller dreidimensionaler Gebäudeobjekte und Stadtmodelle, nach dem Oberbegriff des Anspruchs 1.

Als Textur bzw. Texturierung wird bei einer mittels Computer erzeugten grafischen Darstellung eines virtuellen dreidimensionalen Objektes die Abbildung bezeichnet, die auf der Oberfläche des dreidimensionalen Objektes angezeigt wird. Bei einer digitalen texturierten 3D-Modellierung im Rahmen einer Gebäude- oder Stadtplanung werden zum Beispiel Fassadenflächen auf der Oberfläche der Objekte angezeigt, die mit einem gewissen Wiedererkennungswert Ansichten von Fassaden realer Objekte, d.h. realer Häuser oder sonstiger Gebäude, wiedergeben.

Für derartige Texturierungen sind derzeit zwei Verfahren üblich. Bei einem ersten Verfahren wird eine fotorealistische Texturierung ausgeführt. Dabei wird ein fotografisches Abbild der Oberfläche des realen Objektes auf die Oberfläche des virtuellen Objektes projiziert. Dabei wird in der Regel auf Verfahren zur Bildaufbereitung zurückgegriffen. Bei einem derartigen Verfahren werden, bedingt durch die Verwendung realer Bilddaten, viele Details des realen Objektes wiedergegeben, so dass das virtuelle dreidimensionale Objekt einen hohen Informationsgehalt bietet.

Allerdings ist bei diesem Verfahren eine hohe Bildqualität des fotografischen Quellenmaterials erforderlich, die unter gewissen Umständen nicht von Beginn an gewährleistet werden kann und bei gewissem Bildmaterial nicht ohne weiteres nach zu korrigieren ist. Im Allgemeinen ist eine derartige Texturierung außerdem mit einem hohen manuellen Bearbeitungsaufwand verbunden, bei der die Texturen der virtuellen Objekte einzeln auf ihre Korrektheit überprüft werden und die realen fotografischen Bilddaten auf das virtuelle Objekt angepasst, insbesondere skaliert und gegebenenfalls von Störungen befreit werden müssen. Bedingt durch die Verwendung realer Bilddaten weisen die erzeugten virtuellen Objekte ein großes Datenvolumen auf, wobei auch bei einer verkleinerten Darstellung des Objektes sämtliche Bildinformationen des originalen Bildmaterials zusammen mit dem virtuellen Objekt gespeichert werden müssen.

Alternativ dazu kann auch eine generische Texturierung zur Anwendung kommen. Dabei werden grafische Elemente im Sinne einer Prinzipdarstellung des realen Objektes auf der Oberfläche des virtuellen Objektes positioniert, so dass die gesamte Oberfläche des virtuellen Modells künstlich erzeugt wird. Eine derartige Darstellung gibt weniger Details des realen Objektes wieder, der dabei erreichte Informationsgehalt ist im Vergleich zur fotorealistischen Darstellung weitaus geringer. Vorteilhaft ist bei einem derartigen Verfahren jedoch die Verwendung bereits vorgefertigter grafischer Elemente nach dem Baukastenprinzip, wodurch ein hohe Grad der Automatisierung erreicht werden kann. Die generierten virtuellen Objekte sind außerdem in ihrem Datenvolumen weitaus kleiner als die fotorealistisch texturierten 3D-Objekte.

Ein Verfahren, bei dem sowohl realen Bilddaten als auch Texturierung verwendet werden, ist zum Beispiel bekannt aus BEKINS D. et al: "Build-by-Number: Rearranging the Real World to Visualize Novel Architectural Spaces" (VISUALIZATION, 2005. VIS 05. IEEE MINNEAPOLIS, MN, USA OCT. 23-28, 2005, PISCATAWAY, NJ, USA,IEEE, 23. Oktober 2005, Seiten 143-150, XP010853156 ISBN: 0-7803-9462-3).
Dieses Dokument offenbart ein Verfahren zur Reduzierung der fotographischen Datenmenge, die bei der Modellierung eines dreidimensionalen Objektes, insbesondere eines Gebäudes, nötig ist.
Das Gebäude selbst wird durch eine vereinfachte dreidimensionale Oberfläche ("wireframe") dargestellt, wobei fotographische Daten als Textur auf diese Oberfläche projiziert werden, um die Darstellung realistischer wirken zu lassen.
Zur Reduzierung der fotographischen Datenmenge werden die sich wiederholenden architektonischen Elemente (z.B. Türen, Fenster und Ziegel), die aus einem aufgenommenen Bild extrahiert werden können, nur einmal gespeichert und wiederholt als Textur eingesetzt, und zwar auch in neu modellierten Gebäuden.
Darüber hinaus werden handelsübliche Saftwarepakete erwähnt, die die dreidimensionale Modellierung einer Stadt erlauben unter Verwendung von Texturbibliotheken.

Bei der praktischen Verwendung virtueller 3D-Objekte, bei der einerseits das dreidimensionale Modell so detailreich wie möglich bei einer möglichst geringen Speicherkapazität wiedergegeben bzw. bearbeitet werden soll, zeigt sich jedoch allzu oft das Fehlen eines praktikablen Verfahrens, bei dem für die 3D-Objekte einerseits ein hoher Detailreichtum gesichert und andererseits ein geringes Datenvolumen erreicht werden kann. Oftmals liegt die optimale Wiedergabe eines realen Objektes im virtuellen Modell gerade an irgendeinem Punkt zwischen der fotorealistischen und generischen Darstellung, ein virtuelles Objekt muss nicht alle Einzelheiten des realen Objektes wieder geben, aber die rein generische Darstellung des Objektes ist zu grob und zu detailarm.

Beide Verfahren zur Texturierung erfordern außerdem einen oftmals sehr beträchtlichen manuellen Aufwand. Je nach der vorliegenden Objektkomplexität kann die Texturierung bis zu 60% eines Gesamtaufwandes eines Projektes ausmachen. Für typische Projekte, bei denen dreidimensionale Stadtmodelle am Computer erzeugt werden, müssen gegenwärtig trotz mitunter hocheffektiver Teillösungen große Anteile der Aufwendungen manuell erbracht werden. Dafür sind unter Umständen tausende von Arbeitsstunden von hochspezialisiertem technischen Personal notwendig.

Es besteht somit die Aufgabe, ein Verfahren anzugeben, mit dem der zeitliche Aufwand für die Texturierung durch eine weitgehende Automatisierung beträchtlich reduziert werden kann und sich dadurch die Kosteneffizienz und letztendlich die Wettbewerbsfähigkeit entscheidend verbessern lässt. Konkret soll der Operator von der zeitraubenden und anstrengenden Tätigkeit entlastet werden, die das Umsetzen der Objektansichten in die Textur der dreidimensionalen Objekte mit sich bringt.

Es besteht weiterhin die Aufgabe, eine Verwendung von Schrägsichtaufnahmen, die als Luftbildern gewonnen werden, für Großprojekte durch automatisierte Verfahrensabläufe verfügbar zu machen und die effektive Erfassung von realen Objektoberflächen und realen Texturen mit einer möglichst schnellen und effektiven Umsetzung in Texturen für virtuelle dreidimensionale Objekte zu kombinieren.

Es besteht schließlich die Aufgabe, ein Verfahren zur Texturierung virtueller dreidimensionaler Objekte anzugeben, bei der die Textur des virtuellen Objektes hinreichend genau der fotorealistischen Darstellung entspricht, wobei aber der Speicherumfang des virtuellen Objektes maximal reduziert wird und in etwa der generischen Texturierung entspricht. Das Texturierungsverfahren soll insbesondere gewährleisten, dass die in der fotorealistischen Darstellung sichtbaren charakteristischen Eigenheiten der dargestellten Objekte möglichst umfänglich oder nahezu vollständig am virtuellen Objekt reproduziert werden, obwohl das virtuelle Objekt eine im wesentlichen generische Oberfläche aufweist. Das Verfahren soll insbesondere ermöglichen, dass das Bild des realen Objektes möglichst individuell und mit einem Maximum an Automatisierung in die generische Darstellung überführt werden kann.

Die Aufgaben werden mit einem Verfahren zur Texturierung virtueller dreidimensionaler Objekte, insbesondere virtueller dreidimensionaler Gebäudeobjekte und Stadtmodelle mit einem fotografischen Abbild eines realen Objektes, insbesondere eines Fassadenfotos, gelöst. Das Verfahren zeichnet sich durch folgende erfindungsgemäße Verfahrensschritte aus:

Es erfolgt in einem ersten Schritt eine Projektion des fotografischen Abbildes auf die entsprechende Fläche des virtuellen dreidimensionalen Objektes zum Erstellen einer Rohtextur.

Innerhalb der Rohtextur wird durch ein Klassifikationsverfahren ein Rohtexturelement lokalisiert. Das lokalisierte Rohtexturelement wird durch eine formale Merkmalsmenge, insbesondere einen Merkmalsvektor, computergerecht beschrieben.

Die formale Merkmalsmenge des Rohtexturelements wird mit je einer Merkmalsmenge vorgegebener Bibliothekselemente verglichen und es werden Ähnlichkeitsmaße zwischen dem Rohtexturelement und jeweils einem Bibliothekselement ermittelt.

Das lokalisierte Rohtexturelement wird nun durch ein Bibliothekselement ersetzt, das ein Ähnlichkeitsmaß in einer definierten Größe aufweist. In Verbindung damit wird schließlich die Rohtextur in eine generalisierte Textur des virtuellen Objektes mit einem Ersetzen sämtlicher Rohtexturelement durch Bibliothekselement umgeformt.

Dem erfindungsgemäßen Verfahren liegt somit der Gedanke zugrunde, zunächst möglichst alle strukturbildenden Elemente auf einer fotorealistischen Textur, d.h. die Rohtexturelemente, zu erfassen, die das Aussehen der Textur wesentlich festlegen. Dazu zählen beispielsweise Form und Farbe der Fassade und des Putzes, besondere Zierelemente auf der Fassade, Fenster und Fensterreihen, Türen, Balkone und dergleiche Formen und Strukturen, die in einem fotorealistischen Abbild des realen Objektes erkennbar sind. Dieser Schritt bildet somit die Erkennung und Lokalisierung des jeweiligen Rohtexturelementes.

Dieses Lokalisieren wird mit einem Klassifikationsverfahren verbunden. Dabei werden die Eigenschaften des Rohtexturelementes, z.B. Farbe, Form, Größe, Lage und Position im fotografischen Abbild erfasst und gespeichert.

Die so erfassten Eigenschaften bilden eine formale Merkmalsmenge bzw. einen Merkmalsvektor, mit der jeweils ein Rohtexturelement eindeutig und vergleichbar bezeichnet, erfasst und für eine nachfolgende Datenverarbeitung aufbereitet ist.

Diese formale Merkmalsmenge wird nun mit Merkmalsmengen von vorgegebenen Bibliothekselementen verglichen. Sie kann auch zur Konstruktion von Bibliothekselementen genutzt werden.

Bei den Bibliothekselementen handelt es sich um Bildbausteine bzw. Bildelemente, aus denen sich eine generalisierte Textur zusammensetzen lässt. Der Vergleich zwischen formaler Merkmalsmenge und der Merkmalsmenge des Bibliothekselementes zielt nun darauf ab, ein passendes Bibliothekselement zu ermitteln, mit dem sich das Rohtexturelement durch das Bibliothekselement ersetzen lässt. Hierzu wird ein Ähnlichkeitsmaß zwischen der formalen Merkmalsmenge des Rohtexturelementes und der Merkmalsmenge des Bibliothekselementes ermittelt.

Sofern das Ähnlichkeitsmaß einer vorgegebenen Größe, z. B. einem Maximum, einem Schwellwert oder einem definierten Toleranzbereich, entspricht, wird nun das Rohtexturelement durch das jeweilige Bibliothekselement ersetzt. Am Ort des vormaligen Rohtexturelementes erscheint nun das Bibliothekselement in der Textur.

Durch ein Ersetzen weiterer Rohtexturelemente durch entsprechende Bibliothekselemente wird somit aus der gesamten ursprünglichen Rohtextur eine generalisierte Textur erzeugt. Diese wird also ausgehend von den identifizierten Einzelheiten der Rohtextur aufgebaut. Durch den Abgleich zwischen Rohtexturelement und Bibliothekselement zeigt sie eine größtmögliche Ähnlichkeit mit der Rohtextur mit einer großen und definierten Detailtiefe. Sie weist aber durch die generische Grundstruktur einen minimalen Datenumfang auf. Die Erfassung der Rohtexturelemente, deren Merkmalsklassifizierung und der Abgleich deren Merkmale mit den Merkmalen der Bibliothekselemente ist formalisiert und automatisiert, das Einfügen der Bibliothekselemente erfolgt durch Bildbearbeitungsschritte, die ebenfalls automatisiert sind. Die Erzeugung der generalisierten Textur erfolgt somit weitgehend selbsttätig.

Das fotografische Abbild zum Erzeugen der Rohtextur kann aus verschiedenen Quellen stammen. Besonders vorteilhaft ist die Verwendung eines georeferenzierten terrestrischen Digitalfotos, bei dem der Aufnahmestandort und die Richtung der Aufnahme im terrestrischen Koordinatensystem eindeutig feststellbar sind. Ein derartiges Foto liegt auch bereits digitalisiert vor.

Eine andere vorteilhafte Quelle für das projizierte fotografische Abbild ist ein Luftbild, insbesondere eine Nadir- oder eine Schrägsichtaufnahme.

Zweckmäßigerweise werden Bildbearbeitungsschritte für eine Bildverbesserung zur Beseitigung von Störungen in der Rohtextur ausgeführt. Dies können insbesondere eine Abschwächung und/oder eine Eliminierung nachteiliger Schattenkanten sowie ein Deblurring und/oder ein Schärfen sein. Dadurch wird vermieden, dass Artefakte, die ausschließlich z.B. durch Belichtungsverhältnisse bei der Aufnahme der Bilddaten entstanden sind, beim weiteren Verlauf des Verfahrens als Rohtexturelemente behandelt werden.

Das Klassifikationsverfahren zum Lokalisieren des Rohtexturelementes schließt eine Position-, Form-, Farb-, Flächen- und/oder Kantenerkennung gemäß vorab definierter Suchparameter ein. Dabei wird das lokalisierte Rohtexturelement mindestens hinsichtlich seiner Position in der Rohtextur, Form, Farbe und/oder Kantenstruktur und dergleichen Merkmalen ausselektiert.

Eine derartige Vorgehensweise führt dazu, dass beispielsweise Türen oder Fenster an einer Fassade erkannt und von anderen Fassadenelementen, wie beispielsweise Stuckleisten oder Fallrohren, durch ihre rechteckige Form unterscheidbar erkannt werden. Darüber hinaus werden Strukturen wie Fensterkreuze und Oberlichter zusätzlich erkannt. Das so erkannte Objekt wird beispielsweise als Fenster, insbesondere als Fenster mit einem Oberlicht bzw. einem Fensterkreuz identifiziert.

Skalierungsfähige Merkmale des Rohtexturelementes, insbesondere Höhe und Breite und/oder Bildpunktanzahlen des Rohtexturelementes, werden zweckmäßigerweise auf eine normierte Vergleichsgröße umskaliert. Diese Vergleichsgröße bildet dann einen Bestandteil der formalen Merkmalsmenge des Rohtexturelementes. Eine derartige Vorgehensweise reduziert die zum Austausch eines Rohtexturelementes möglicherweise notwendigen Bibliothekselemente. So ist es insbesondere möglich, für eine Reihe von Fenstern mit einem auch unter Umskalierungen festen Verhältnis von Höhe und Breite im wesentlichen nur ein Bibliothekselement vorsehen zu müssen. Die normierte Vergleichsgröße bietet nun die Möglichkeit, einen sehr einfachen Abgleich zwischen Rohtexturelement und Bibliothekselement auszuführen und die Übereinstimmung beider Elemente auf unkomplizierte Weise zu testen.

Skalierungsunabhängige Merkmale des Rohtexturelementes, insbesondere Farbwerte, bilden eine überwiegend absolute Vergleichsgröße in der formalen Merkmalsmenge des Rohtexturelementes. Eine Farbskalierung für unterschiedlich beleuchtete Teile der Fassaden ist jedoch möglich, um z.B. Effekte von Licht und Schatten darzustellen. Ein Beispiel dafür, ist ein Fassadenfarbton, der auch dann keine Veränderung erfährt, wenn die Größe der Fassade skaliert wird. Ein derartiges Merkmal kann nur einen absoluten Wert annehmen und daher auch nur absolut verglichen werden.

Der Vergleich der formalen Merkmalsmenge des Rohtexturelementes und der Merkmalsmenge jeweils eines Bibliothekselementes schließt einen Vergleich der normierten Vergleichsgrößen ein, wobei ein Ähnlichkeitstest auf ein unter der Skalierung invariantes Verhältnis zwischen einer ersten normierten Vergleichsgröße und einer zweiten normierten Vergleichsgröße ausgeführt wird.

Bei diesem Test wird von der Tatsache ausgegangen, dass Größenverhältnisse unter Ähnlichkeitsabbildungen invariant bleiben. Ein Rohtexturelement und ein Bibliothekselement sind demnach dann ähnlich, wenn dieser Test zu einem positiven Ergebnis führt. Das Bibliothekselement kann in diesem Fall durch eine Ähnlichkeitstransformation in das Rohtexturelement überführt werden und überdeckt somit in seiner Form den Bildbereich des Rohtexturelement.

Der Vergleich der formalen Merkmalsmenge des Rohtexturelementes und der Merkmalsmenge des Bibliothekselementes schließt weiterhin einen Vergleich der absoluten Vergleichsgrößen ein. Dabei wird ein Test auf eine größtmögliche Übereinstimmung der absoluten Vergleichsgrößen ausgeführt.

Dieser Test stellt im wesentlichen den Grad der Übereinstimmung zwischen absoluten Größen, zum Beispiel Farbwerten, fest. Er ist ein direkter Abgleich zwischen Eigenschaften des Rohtexturelementes und des Bibliothekselementes, wobei eine Anpassung der nächst besten verfügbaren Variante des Bibliothekselementes an das Rohtexturelement prinzipiell dadurch möglich ist, indem die entsprechende absolute Größe des Bibliothekselementes entsprechend verändert wird.

Bei der Ermittlung des Ähnlichkeitsmaßes zwischen der formalen Merkmalsmenge des Rohtexturelementes und der Merkmalsmenge des Bibliothekselementes wird ein Übereinstimmungsgrad der absoluten Vergleichsgrößen und/oder eine Konstanz der invarianten Verhältnisse ausgeführt. Das größte Ähnlichkeitsmaß zwischen Rohtexturelement und Bibliothekselement besteht dann, wenn sowohl die absoluten Vergleichsgrößen in einem beliebig engen Toleranzbereich hinreichend gut übereinstimmen und die Verhältnisse zwischen den normierten Vergleichsgrößen möglichst konstant sind.

Das Ähnlichkeitsmaß wird bei einer zweckmäßigen Ausführungsform vorab definiert. Dabei werden alle Bibliothekselemente mit einem innerhalb eines Toleranzbereiches liegenden Ähnlichkeitsmaß als mögliche Ersetzungen für das Rohtexturelement als Auswahloptionen ausgegeben, sortiert nach Größe der Ähnlichkeit.

Das Ersetzen des Rohtexturelementes durch das Bibliothekselement wird durch ein Ausschneiden der Punktmenge des Rohtexturelementes aus der Rohtextur und ein Einsetzen der Punktmenge des Bibliothekselementes in die Rohtextur ausgeführt. Grundsätzlich wird demnach ein als Cut und Copy bekanntes Ausschneiden-Einfügen-Verfahren ausgeführt, bei der so viele Areale der Rohtextur wie möglich durch Bibliothekselemente ersetzt werden um die Rohtextur möglichst vollständig in die generalisierte Textur zu überführen.

Dieser Ersetzungsvorgang schließt zweckmäßigerweise eine manuelle Nachbearbeitung ein. Damit können eventuell notwendige Korrekturen vorgenommen werden.

Praktisch erfolgt dies so, dass in der Rohtextur nicht klassifizierte Abschnitte zweckmäßigerweise als Pixelgruppen, insbesondere Bitmaps, in die generalisierte Textur eingefügt werden. Diese nicht klassifizierten Areale, beispielsweise Ornamente mit einer komplizierten Form, bilden dann eine schließlich nachträglich in die generalisierte Textur eingefügte Bildkomponente.

Für eine sparsame Verwendung von Verfahrenskapazitäten, insbesondere von Speicherressourcen und Rechenzeit. kann bei dem Umformen der Rohtextur in die generalisierte Textur eine mindestens teilweise Kachelung des virtuellen Objektes durch eine periodische Abfolge eines an ein Rohtexturelement angepassten Bibliothekselementes erfolgen. Dabei werden Bibiliothekselemente im wesentlichen nur für eine Stelle der Rohtextur angepasst, wobei diese angepassten Elemente kachelartig aneinander gereiht werden und das virtuelle Objekt abdecken.

Das erfindungsgemäße Verfahren soll nun an einem Ausführungsbeispiel in Verbindung mit den Figuren 1 bis 8 näher erläutert werden. Es werden für gleiche oder gleichwirkende Verfahrensschritte und Komponenten die gleichen Bezugszeichen verwendet.

Es zeigt

Fig. 1 ein beispielhaftes terrestrisches Foto einer Hausfassade in einer schwarz-weiß Codierung,

Fig. 2 ein für die Hausfassade aus Fig. 1 erstelltes virtuelles dreidimensionales Objekt in einer dem Foto aus Fig. 1 entsprechenden Ansicht,

Fig. 3 grundlegende Verfahrensschritte in einer Übersichtsdarstellung,

Fig. 4 beispielhafte Rohtexturelemente an dem vorhergehend gezeigten Fassadenbild,

Fig. 5 Skalierungen und Vergleiche von Merkmalsmengen zwischen Rohtexturelement und Bibliothekselement am Beispiel eines Fensters und Fensterkreuzes,

Fig. 6 eine beispielhafte Baumstruktur für einige Bibliothekselemente,

Fig. 7 Ersetzungen von Rohtexturelementen durch Bibliothekselemente am Beispiel einiger Fensterformen,

Fig. 8 Ersetzungen nicht klassifizierter Rohtexturstrukturen am Beispiel von Stuckelementen eines Türbogens

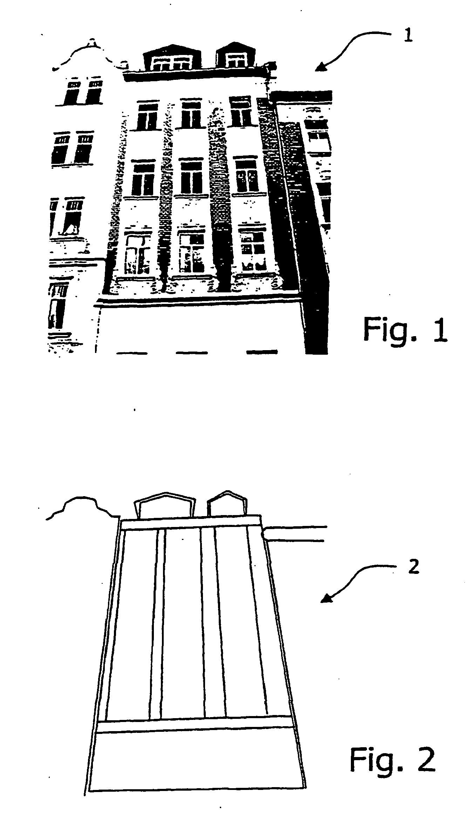

Fig. 1 zeigt ein Fassadenbild 1 und Fig. 2 die dazu gehörende Oberfläche des dafür erstellten virtuellen dreidimensionalen Objektes 2 in einer dem Bild in Fig. 1 entsprechenden Perspektive. Das hier in Fig. 1 gezeigte Fassadenbild ist in Form eines terrestrischen Digitalfotos erstellt worden. Zweckmäßigerweise ist das terrestrische Bild georeferenziert. Das heißt, dass der Standort der fotografischen Anordnung im Koordinatensystem der Erde und deren Ausrichtung bezüglich der Koordinatenachsen am Ort der Aufnahme eindeutig bekannt ist.

Anstelle der terrestrischen Aufnahme können auch Schrägsicht- bzw. Nadir-Luftaufnahmen verwendet werden. Bei dem in Fig. 2 gezeigten virtuellen dreidimensionalen Objekt handelt es sich um eine von dem realen Objekt, d.h. der Fassade bzw. dem dazu gehörenden Haus, abstrahierte Kontur, deren Begrenzungen die Körperbegrenzungen des realen Objektes im verkleinernden Maßstab hinreichend genau wiedergeben. Die virtuelle Kontur muss insbesondere so genau sein, dass das erfasste Fassadenbild auf die entsprechende Seitenfläche des virtuellen Objektes passgenau und verzerrungsfrei einzufügen ist.

Der Vergleich der Darstellungen aus Fig. 1 und Fig. 2 zeigt, dass für die Anpassung des Fassadenbildes und der Seitenfläche des virtuellen dreidimensionalen Objektes Gebäudeformen und -umrisse, wie beispielsweise Dachgauben oder auch durchgehende Fassadenlinien als Referenzen und Bezugspunkte verwendet werden können.

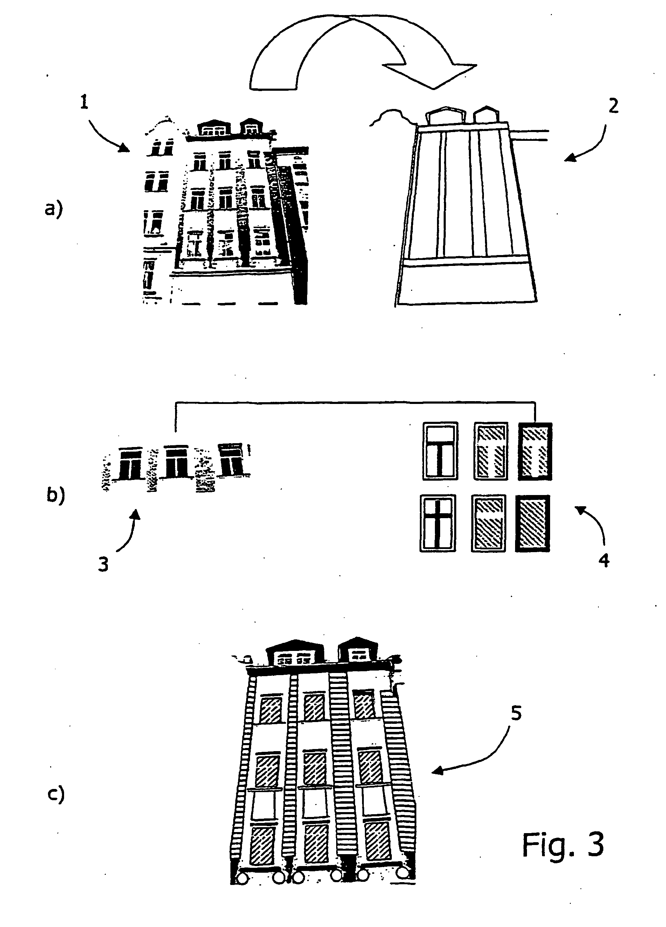

Fig. 3 zeigt grundlegende Verfahrensschritte des erfindungsgemäßen Verfahrens. Das Fassadenbild 1 wird in einem Verfahrensschritt a auf das virtuelle dreidimensionale Objekt auf eine dafür vorgesehene Oberfläche als Textur aufgebracht. Diese Textur wird im folgenden als Rohtextur bezeichnet. Zur Generierung der Rohtextur können dafür bereits vorgesehene Softwaremodule verwendet werden, die für gewöhnlich zum Erstellen fotorealistischer Texturen verwendet werden. Die Erstellung der Rohtextur erfolgt somit im wesentlichen vollautomatisch.

Unmittelbar nach der Erstellung der Rohtextur oder bereits vor deren Generierung werden auf der Menge der Bildpunkte des Fassadenbildes gegebenenfalls Bildbearbeitungen für eine Verbesserung der Bildqualität und in Vorbereitung der Strukturerkennungen ausgeführt. Dies betrifft vor allem Schattenverläufe und dadurch entstehende störende Kantenstrukturen auf den Bilddaten. Hierzu können vor allem ein Deblurring oder ein Schärfen von Kanten vorgenommen werden.

Besonders zweckmäßig und in der Regel für eine nachfolgende Erkennung von Rohtexturelementen notwendig ist eine Umwandlung eines ursprünglich farbigen Fassadenbildes in ein Fassadenbild in Form einer Kopie im Grauwert- oder Schwarzweiß-Modus. Nach einer derartigen Farbtransformation zeichnen sich, wie auch in den Figuren erkennbar, Fenster und Fensterkreuze durch sehr markante schwarze, durch helle Linien durchschnittene Flächen vor einem helleren Fassadenuntergrund ab. Eine derartige Umformung ist auch dann vorteilhaft, wenn Fassadengestaltungen mit unterschiedlichen Farben in ihrer Struktur ermittelt werden sollen. Bei dem Beispiel in Fig. 3 sind insbesondere die streifenförmigen Klinkerelemente durch die Umwandlung des Bildes in den Schwarzweiß-Modus sehr gut zu identifizieren.

Bei einer Reduktion auf eine s/w-Bilddarstellung geht allerdings sehr viel Information dadurch verloren, dass eine große Menge von verschiedenen Farbwerten auf nur wenige s/w-Werte abgebildet wird. Dabei werden die Schwellwerte für die Zuordnung zwischen Farbbereich und Schwarz-Weiß-Bereich mehr oder weniger willkürlich gewählt. Dieses Problem lässt sich dadurch vermeiden, indem auf einen farbanalysefähigen Klassifikator zurückgegriffen wird.

Dieser ermöglicht die Detektierbarkeit der Rohtexturelemente hinsichtlich ihrer Kontur mit einer Zuordnung von Bibliothekselementen bei verschiedenen Einfärbungen.

Auf die so erstellte Rohtextur wird in einem Schritt b das Klassifikationsverfahren angewandt. Dabei werden zum einen spezielle Rohtexturelemente 3, zum Beispiel Fensterstrukturen oder sonstige Fassadenelemente wie Balkone, Türen, Stuck usw. auf der Rohtextur lokalisiert und zum anderen mit vorab gespeicherten Bibliothekselementen 4 verglichen. Bei dem hier gezeigten Beispiel sind die Rohtexturelemente als Fenster ausgebildet, die eine charakteristische Rechteckform mit einem gewissen Verhältnis zwischen Höhe und Breite und typischen Formen von Fensterkreuzen aufweisen, die außerdem eine typische Farb- oder Kontrastwirkung zeigen. Als Bibliothekselemente 4 stehen Bildelemente zur Verfügung, mit denen die erfassten Rohtexturelemente in ihren Merkmalen verglichen werden. Die Lokalisierung der Rohtexturelement, deren Beschreibung und deren Abgleich mit den Bibliothekselementen bildet den Verfahrensschritt der Klassifizierung. Deren Abschluss ist die Auswahl eines Bibliothekselementes, das die Eigenschaften des Rohtexturelementes mit einer besonders großen Ähnlichkeit wiedergibt. Eine detaillierte Darstellung der Klassifizierung erfolgt weiter unten in der Beschreibung.

Unter Verwendung der Bibliothekselemente wird in einem abschließenden Schritt c die gesamte Rohtextur in eine generalisierte Textur 5 umgesetzt. Dabei werden alle klassifizierten Rohtexturelemente, d.h. Fenster und andere Strukturen auf der Fassade, durch Bibliothekselemente ersetzt und die generische Textur baukastenartig zusammengesetzt. In dem Beispiel aus Fig. 3 sind sämtliche Fenster aus der Rohtextur und die über die Fassade in vertikalen Streifen verlaufenden Klinkerstrukturen durch die entsprechenden Bibliothekselemente ausgetauscht.

Die Klassifizierung beispielhafter Rohtexturelemente soll im folgenden näher erläutert werden.

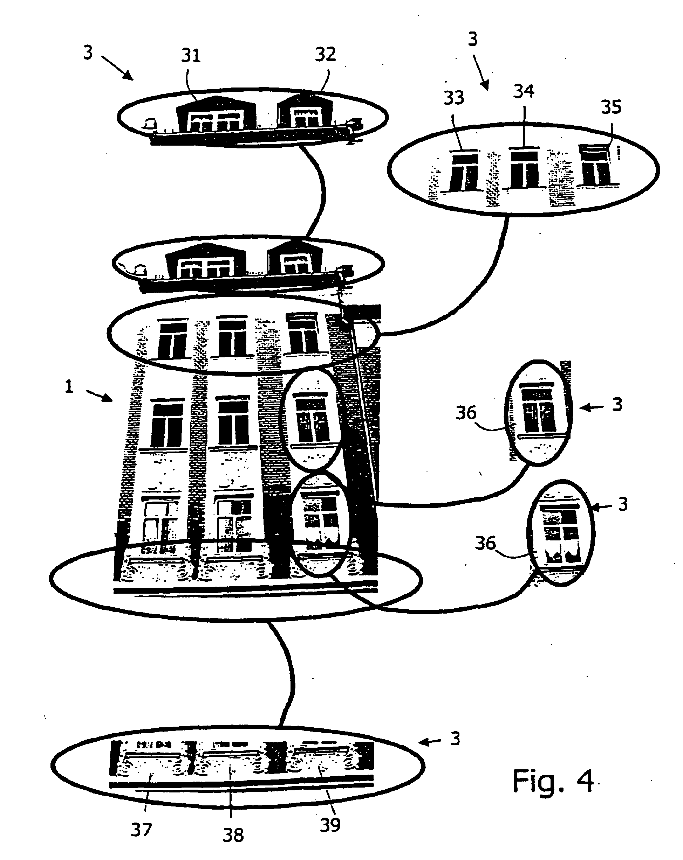

Fig. 4 zeigt einige beispielhafte Rohtexturelemente, insbesondere Fenster und Stuckelemente. Das beispielhafte Fassadenbild weist zwei verschiedene Gaubenfenster 31 und 32 auf. Das Gaubenfenster 31 besteht bei diesem Beispiel aus zwei dicht nebeneinander liegenden Einzelfenstern. Das Gaubenfenster 32 bildet ein Einzelfenster mit einem T-förmigen Fensterkreuz. Sowohl das Fenster 31 als auch das Fenster 32 setzen sich durch ihre weißen Rahmen deutlich vom Hintergrund ab.

Die Fenster 33, 34 und 35 bilden bei diesem Beispiel im wesentlichen schwarze, durch ein weißes T-förmiges Fensterkreuz unterbrochene Formen, die sich deutlich vom hier im wesentlichen weißen Fassadenhintergrund abheben. Das Fenster 36 entspricht in seiner Form im wesentlichen den Fenstern 33 bis 35, ist aber in seiner Form durch ein hinter den Scheiben gelegenes Objekt beeinflusst, das die schwarzen Scheibenflächen beeinträchtigt und inhomogen erscheinen lässt. Deutlicher tritt dieser Effekt bei einem weiteren Fenster 36 auf, bei dem eine Gardine die schwarze Scheibenstruktur beeinträchtigt und die Gestalt des Fensterkreuzes fast unkenntlich macht.

Schließlich treten Stuckelemente 37, 38 und 39 hinzu, die als weitere Rohtexturelemente aufgefasst werden können und deren Kontur vom Fassadenhintergrund undeutlicher zu unterscheiden ist.

Die Rohtexturelemente 31 und 32 bzw. 33 bis 35 können durch eine Formerkennung auf dem schwarz-weiß codierten Bild lokalisiert werden. Dazu werden die Bildpunkte der Rohtextur ausgewertet, wobei die Areale der sich schwarz abhebenden Scheiben vor der weißen Umgebung und die Form der Fensterkreuze durch eine Software ausgelesen werden. Dabei wird vor allem die rechteckige Form der schwarzen Fensterkonturen und deren regelmäßige Anordnung zueinander registriert. Die weißen Fensterkreuze bilden bei dieser Bilderkennung weiße Mengen von streifenförmig angeordneten Bildpunkten in einer wohldefinierten Breite und Länge, die zwischen die rechteckigen schwarzen Flächen der Fensterscheiben eingeschoben sind. Die Bildpunktmenge aus weißen Streifen und schwarzen Flächen wird sodann zusammen mit dessen Position im Bild als ein Rohtexturelement erkannt und ausgelesen.

Zur Suche und Erkennung von Fenstern werden insbesondere a priori angenommene Fensterverteilungen auf der Fassadenfläche genutzt. So wird bei einer Höhe der Fassadenfläche von 15m davon ausgegangen, dass das abgebildete Gebäude 4 Etagen zu einer Höhe von je 3,75m aufweist. Auf der Grundlage dieser Ausgangsparameter wird eine Suche nach 4 Fensterreihen im entsprechenden Abstand vorgeschlagen und eventuell ausgeführt. Es zeigt sich, dass eine derartige Vorschlag-Automatik erstaunlich gute Ergebnisse zeigt.

Inhomogenitäten wie zum Beispiel bei der Fensterstruktur 36 können durch eine Bildbearbeitung in der Regel beseitigt oder unterdrückt werden, die der Lokalisierung der Rohtexturelemente vorausgeht. Hierzu sind prinzipiell mehrere Bildbearbeitungen möglich. Insbesondere können Inhomogenitäten dadurch beseitigt werden, indem das Fassadenbild in einer zweckmäßigen Weise farbcodiert wird. Regelmäßige Strukturen, wie beispielsweise Fensterrahmen und Fensterkreuze, heben sich durch ihre einheitliche Färbung dadurch hervor und sind dann für die Strukturerkennung besser zu ermitteln. Die in der Figur gezeigte Schwarz-Weiß-Kodierung erweist sich besonders dann als zweckmäßig, wenn regelmäßige Strukturen auf einer hellen Fassade zu lokalisieren sind. In der Regel wird bei derartigen Bildbearbeitungen dann das entsprechend umkodierte Bild als Kopie zur Strukurerkennung genutzt.

Die Stuckelemente 37 bis 39 zeichnen sich durch unregelmäßigere bzw. komplizierter Strukturen aus, die sich allerdings von der ansonsten unstrukturierten und weißen Fassade deutlich unterscheiden. Derartige Areale können entweder als Flächen mit einem gewissen durchschnittlichen Grauwert ausgelesen werden oder es kann ein Ausschneiden dieser Bildflächen in Form eines Bitmaps erfolgen. Entsprechende Verfahrensschritte werden später näher erläutert.

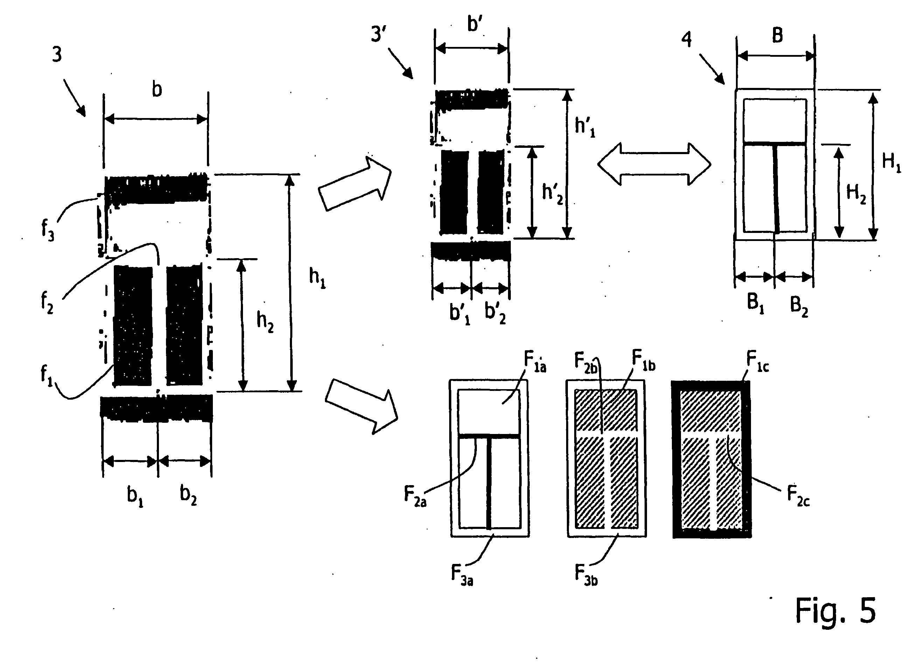

Fig. 5 stellt das Klassifikationsverfahren beispielhaft an einem Fensterkreuz dar. Die Figur zeigt links ein durch die Bilderkennung ermitteltes Rohtexturelement. Für eine Klassifizierung des Rohtexturelementes muss die in der Bilderkennung ermittelte Menge an Bildpunkten mit einem Bibliothekselement 4 verglichen werden. Im wesentlichen werden hierzu ein Struktur-, ein Größen- und ein Farbabgleich ausgeführt. Hierzu werden Merkmalsmengen zwischen dem Rohtexturelement und dem Bibliothekselement verglichen.

Die Größe des Rohtexturelementes spielt eine wesentliche Rolle bei dessen Merkmalsmenge. Von Bedeutung ist in diesem Fall jedoch nicht vorrangig die absolute Größe des Rohtexturelementes, denn diese ändert sich bei jedem Skalierungsvorgang und kann deswegen nicht mit einer absoluten Größe eines Bibliothekselementes verglichen werden. Vielmehr wird bei dem Größenvergleich zwischen Rohtexturelement und Bibliothekselement überprüft, ob die Abmessungen den geometrischen Gesetzen für Ähnlichkeitstransformationen gehorchen.

Fig. 5 zeigt zum Beispiel ein Rohtexturelement 3 mit einer Breite b und einer Höhe $h_1$. Weiterhin weist das Rohtexturelement ein Fensterkreuz auf, dessen Querbalken sich auf einer Höhe $h_2$ befindet, während der senkrechte Balken des Fensterkreuzes die Breite des Rohtexturelementes in einem Fußpunktverhältnis $b_1/b_2$ teilt. Es kann angenommen werden, dass ein Rohtexturelement und ein beliebiges Bibliothekselement dann in ihren Formen übereinstimmen, wenn die Größenverhältnisse beliebiger Strecken im Rohtexturelement bzw. im Bibliothekselement übereinstimmen. Unter dieser Bedingung kann ein Bibliothekselement durch Ähnlichkeitstransformationen auf die Form des Rohtexturelements skaliert werden.

Für eine Merkmalsmenge des Rohtexturelementes werden nunmehr zweckmäßige Größenverhältnisse bestimmt. Bei dem Beispiel aus Fig. 5 bietet sich vor allem das Größenverhältnis zwischen Breite und Höhe $b/h_1 = v_1$, das Verhältnis zwischen der Höhe des Querbalkens und der Gesamthöhe $h_2/h_1 = v_2$ bzw. das Fußpunktverhältnis $b_1/b_2 = v_3$ an.

Weiterhin werden aus den Bilddaten der Rohtextur Farbinformationen einzelner Bildareale des Rohtexturelements ausgelesen. Von Bedeutung sind bei dem hier gezeigten Beispiel insbesondere die Farben $f_1$ und $f_2$ der Fensterflächen bzw. des Fensterkreuzes bzw. die Farbe $f_3$ des Fensterrahmens. Die beispielhafte Merkmalsmenge des Rohtexturelementes lässt sich dann als ein formaler Merkmalsvektor darstellen, der das Rohtexturelement vollständig beschreibt.

$$m = (v_1;\ v_2;\ \cdot v_3;\ f_1;\ f_2;\ f_3)$$

Die Werte des Merkmalsvektors m bleiben auch dann unverändert, wenn das Rohtexturelement skaliert wird. In dem Rohtexturelement 3' beispielsweise bleiben die Verhältnisse $v_1$ bis $v_3$ und $f_1$ bis $f_3$ konstant, obwohl die Abmessungen des nunmehr kleineren Rohtexturelementes andere Werte angenommen haben.

In Fig. 5 ist im Vergleich dazu ein Bibliothekselement 4 gezeigt, dem in Analogie zu den in Bezug auf das Rohtexturelement definierten Kenngrößen ein vergleichbarer Merkmalsvektor von vornherein zugeordnet ist. Das Verhältnis von Breite und Höhe $B/H_1 = V_1$, das Verhältnis von Höhe des Querbalkens zur Gesamthöhe $H_2/H_1 = V_2$ sowie das Fußpunktverhältnis $B_1/B_2 = V_3$ des Bibliothekselementes wie auch die Farbwerte $F_1$, $F_2$ und $F_3$ der Farbareale des Bibliothekselementes werden in genau der gleichen Weise definiert und zu einem Merkmalsvektor M des Bibliothekselements zusammengefasst:

$$M = (V_1; V_2; V_3; F_1; F_2; F_3)$$

**[0066]** Für die Klassifizierung wird der Merkmalsvektor m des Rohtexturelementes mit dem Merkmalsvektor des Bibliothekselementes komponentenweise verglichen. Dabei wird ein Ähnlichkeitsmaß zwischen beiden Vektoren bestimmt. Die Toleranzen für die Abweichungen der einzelnen Werte beim Vergleich können vorgegeben und grundsätzlich beliebig verändert werden. Zweckmäßigerweise werden die Toleranzbereiche für die Abweichungen der Verhältnisse $v_n$ bzw. $V_n$ in beiden Vektoren enger und die Abweichungstoleranzen für die Abweichungen der Farbwerte größer gewählt. Eine korrekte Wiedergabe der Größe bzw. der Größenverhältnisse des Rohtexturelementes durch das Bibliothekselement ist demnach wichtiger als eine korrekte Farbwiedergabe. Derartige Präferenzen können natürlich je nach Erfordernis anders gewählt werden.

**[0067]** Für die Farbwerte $f_n$ bzw. $F_n$ kann auf die gängigen Farbsysteme für Bildbearbeitungsprogramme, insbesondere das RGB-, bzw. CMYK-System, zurückgegriffen werden. Bei dem in Fig. 5 gezeigten Beispiel werden drei Bibliothekselemente als Auswahl bereitgestellt, die jeweils Farbwerte $F_{1a}$, $F_{2a}$, $F_{3a}$; $F_{1b}$, $F_{1b}$, $F_{3b}$ bzw. $F_{1c}$, $F_{2c}$, $F_{3c}$ aufweisen. Das endgültig ausgewählte Bibliothekselement entspricht in dem hier gezeigten Beispiel dem Bibliothekselement mit den Farben $F_{1b}$, $F_{2b}$, $F_{3b}$. Das Rohtexturelement ist damit sowohl in seiner Größe, als auch in seiner Farbe klassifiziert.

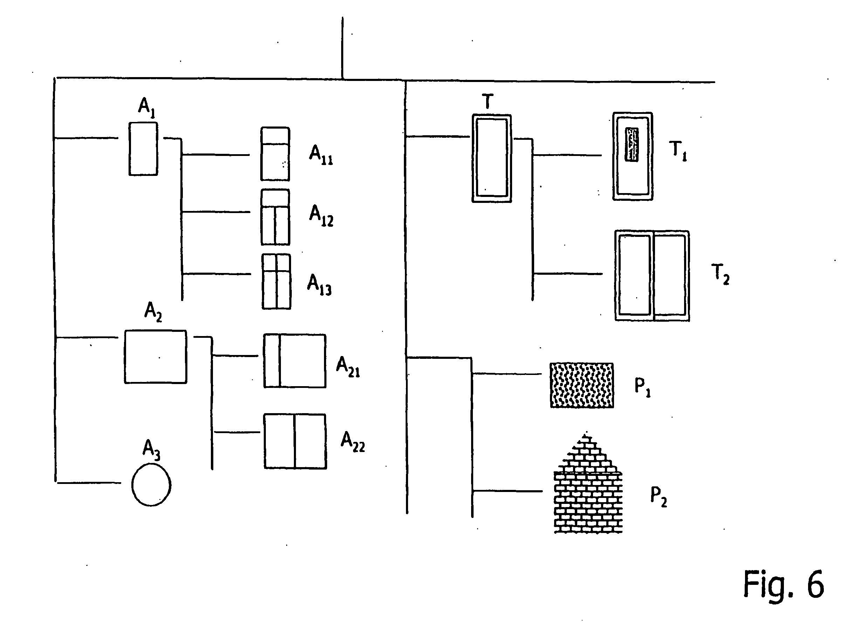

**[0068]** Fig. 6 zeigt eine beispielhafte und stark vereinfachte Baumstruktur zur Verwaltung von Bibliothekselementen. Die Bibliothekselemente sind bei diesem Ausführungsbeispiel vorwiegend nach funktionellen Kriterien geordnet. Es sind z.B. Bibliothekselemente für Fenster, Türen, Fassadenflächen usw. enthalten. Grundsätzlich ist es auch möglich, Bibliothekselemente nach anderen, insbesondere rein graphischen Kriterien zu sortieren. In diesem Fall würde der Baum eine Verzweigung für rechteckige, kreisförmige, elliptische und dergleichen weitere Bibliothekselemente unabhängig von deren funktionellen Bezügen enthalten. Eine derartige alternative Baumstruktur wäre insofern vorteilhafter, als dass die Rohtexturelemente über die Bildverarbeitung vorwiegend über die Form lokalisiert werden.

**[0069]** Darüber hinaus können auch zwei Baumstrukturen kombiniert vorgesehen sein, wobei die Bibliothekselemente gleichzeitig auf beide Arten verwaltet werden.

**[0070]** Die Aufgliederung der Bibliothekselemente nach ihrer Funktion bringt jedoch gewisse Vorteile mit sich. So kann insbesondere ein Nutzer vorab festlegen, dass Rohtexturelemente, die innerhalb eines bestimmten vorgegebenen Bildabschnitts in der Rohtextur erfasst werden, ausschließlich als Fenster bzw. ausschließlich als Tür oder dergleichen Element behandelt werden. Damit kann in gewisser Weise eine schnellere Klassifizierung der Rohtexturelemente erfolgen, weil beispielsweise ein Rohtexturelement mit einer T-förmigen Bildstruktur, das nicht in der Nähe der unteren Bildkante liegt, auf ein Fenster verweist. In diesem Fall würde ein Suchalgorithmus zum Auffinden des zutreffenden Bibliothekselementes nicht alle rechteckigen Formen absuchen, sondern von Beginn an in das Verzeichnis "Fenster" wechseln.

**[0071]** Bei dem hier gezeigten Beispiel ist ein Verzeichnis $A_1$ für hohe rechteckige Fenster, ein Verzeichnis $A_2$ für breite rechteckige Fenster und ein Verzeichnis $A_3$ für runde bzw. anders geformte Fenster vorgesehen. Das Verzeichnis $A_2$ enthält ebenfalls weitere Untergruppen $A_{21}$ und $A_{22}$, die auf unterschiedliche Teilungen der Fensterfläche bezogen sind.

**[0072]** Die genauen Verhältnisse zwischen Höhe und Breite der Bibliothekselemente gemäß der Beschreibung in Verbindung mit Fig. 5 müssen dabei nicht von vornherein festgelegt sein. Sie können jederzeit durch Veränderungen, durch ein Strecken oder Stauchen von Höhe und Breite verändert werden. Die logische Unterscheidung zwischen hohen und breiten Rechteckfenstern ist jedoch insofern sinnvoll, als das gewisse Fensterkreuz-Formen erfahrungsgemäß nur bei gewissen Fenstertypen vorkommen.

**[0073]** So enthält das Verzeichnis $A_1$ eine Untergruppe $A_{11}$ für Fenster mit einem Oberlicht, eine Untergruppe $A_{12}$ für zweigeteilte Fenster mit einem Oberlicht und eine Untergruppe $A_{13}$ für zweigeteilte Fenster mit einem zweigeteilten Oberlicht. Die Bibliothekselemente der jeweiligen Untergruppe sind mit Merkmalsvektoren verknüpft, die sich durch unterschiedliche Parametersätze auszeichnen. So enthalten z.B. die Merkmalsvektoren der Untergruppe $A_{11}$ keinen Parameter für das oben erwähnte Fußpunktverhältnis, da kein Fensterkreuz vorhanden ist.

**[0074]** Die mathematische Gestalt des Merkmalsvektors, d.h. die Anzahl der vorgesehenen Parameter und Komponenten bildet demnach die grafische Konstruktion des Bibliothekselementes ab. Zweckmäßigerweise enthält die Datenbank der Bibliothekselemente vorwiegend Daten-Vektoren und Daten-Felder, die entsprechend der Merkmalsvektoren dimensioniert sind, aber im wesentlichen keine Grafiken oder Bilder der Bibliothekselemente selbst. Grafisch werden die Bibliothekselemente erst dann durch entsprechende Programmroutinen generiert, wenn die entsprechenden Teilbereiche der generalisierten Textur erstellt werden.

**[0075]** Der Umfang der Datenbank kann dadurch sehr kompakt gehalten werden, die Festlegung der Struktur der Merkmalsvektoren und einiger Randbedingungen erlaubt es darüber hinaus, z.B. die erwähnten Verzeichnisse des Typs $A_1$ und $A_2$ durch eine einzige Gestalt des Merkmalsvektors zu repräsentieren, wobei die Komponenten dieses Merkmalsvektors entsprechend der in den Verzeichnissen enthaltenen Bibliothekselemente verändert bzw. mit entsprechenden Werten belegt werden.

**[0076]** Es versteht sich, dass gemäß der Beschreibung zu Fig. 5 in jedem der Unterverzeichnisse eine Rei-

he von Farbmodellen für die jeweiligen Bibliothekselemente abgespeichert sind, wobei jedem einzelnen Bibliothekselement ein Merkmalsvektor mit einem entsprechenden Parametersatz gemäß der vorherigen Beschreibung zugeordnet ist. Zudem können auch unterschiedliche Bibliothekselemente mit sich unterscheidenden Höhen-Breiten-Verhältnissen vorab als feste Modelle mit festen Eigenschaften vorgegeben sein. Diese festen Modelle mit definierten Parametern in den Merkmalsvektoren können bei einem sehr groben und einfachen Verfahrensablauf zum standardisierten Ersetzen von Rohtexturelementen verwendet werden.

Das Verzeichnis T umfasst Bibliothekselemente für Türen. Als Türen gelten per zweckmäßiger Definition alle Rohtexturelemente, die sich im Bereich einer unteren Bildkante bzw. einer unteren Kante des dreidimensionalen virtuellen Objektes bzw. der Rohtextur befinden. Beispielhafte Unterverzeichnisse werden durch ein Verzeichnis für Einfachtüren $T_1$ und ein Verzeichnis für Doppeltüren $T_2$ gebildet.

Weiterhin ist ein Verzeichnis für Fassadenoberflächen vorgesehen. Dieses Verzeichnis beinhaltet im wesentlichen Füllmuster oder Füllbilder mit unterschiedlichen Farben und Strukturen, die gemäß einer auf der Rohtextur ausgeführten Mustererkennung dimensioniert sind. So ist beispielsweise ein Verzeichnis $P_1$ für rauen Putz und ein Verzeichnis $P_2$ für eine Klinkerfassade vorgesehen. Die in diesen Verzeichnissen gespeicherten Bibliothekselemente sind im wesentlichen Bitmaps oder andere Grafikfiles, in denen über definierte Helligkeits- und Farbwerte Muster abgespeichert sind, die mit gegebenen Strukturen in der Rohtextur verglichen werden. Im einfachsten Fall enthält der Bereich P eine einfache Farbpalette mit unterschiedlichen Farbwerten, die mit Farben auf der Rohtextur verglichen werden.

Die unterschiedlichen Unterverzeichnisse bzw. die verschiedenen darin abgelegten Bibliothekselemente, können auch kombiniert werden. So kann beispielsweise eine Farbfläche eines Bibliothekselementes A "Fenster" mit einer Farbe oder einem Muster aus dem Unterverzeichnis P "Muster" gefüllt werden. Dabei ermittelt eine erste Routine gemäß der oben gegebenen Beschreibung die Form und den Typ des Bibliothekselementes "Fenster", während eine zweite Routine die exakten Farb- oder Musterstrukturen aus der Rohtextur ermittelt und klassifiziert. In diesem Zusammenhang ist also auch darauf hinzuweisen, dass den einzelnen Unterverzeichnissen und Bereichen im Baumdiagramm aus Fig. 6 unterschiedliche Klassifizierungsroutinen zugeordnet sein können.

Ein weiterer hier nicht gezeigter Bereich der Bibliothekselemente wird durch einfache Zierelemente für Fassaden, beispielsweise Simse, Schlusssteine, einfache Stuckelemente usw. gebildet. Deren Zuordnung zu entsprechenden Rohtexturelementen erfolgt im wesentlichen über eine Kombination aus einer Formerkennung und einer Skalierung, wie sie im Beispiel nach Fig. 5 bereits beschrieben wurde.

Das Ersetzen der Rohtexturelemente durch die Bibliothekselemente erfolgt durch ein Ausschneiden und Ersetzen. Das heißt, dass das Areal des klassifizierten Rohtexturelements in der Rohtextur ausgeschnitten und durch das Bibliothekselement ersetzt wird. Dabei kann es notwendig werden, dass das Bibliothekselement in seiner Größe skaliert werden muss.

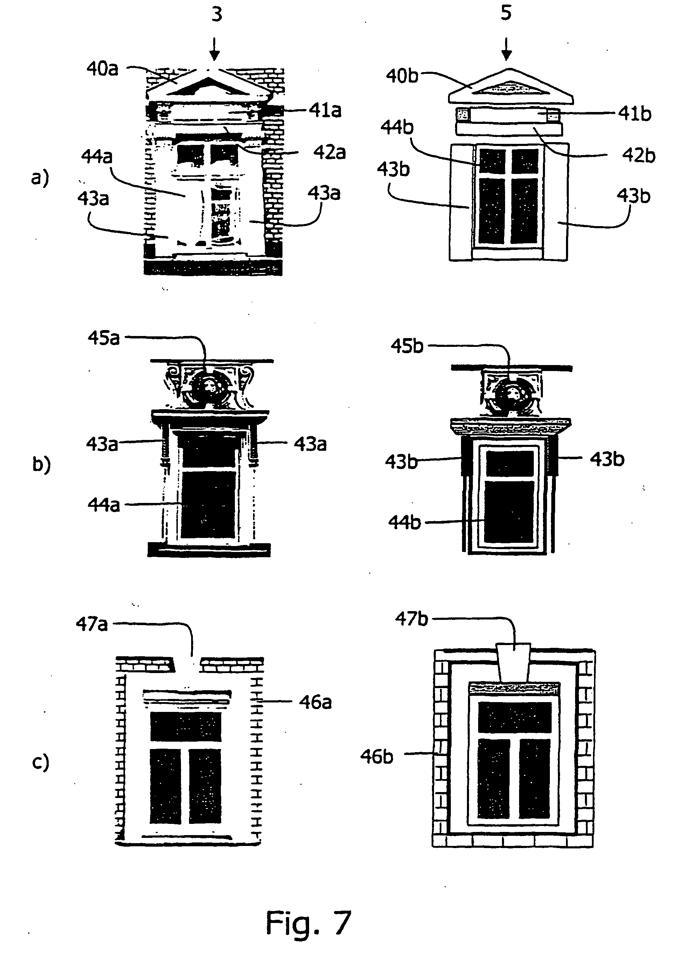

Fig. 7 zeigt einige beispielhafte Ersetzungen von Rohtexturelementen durch Bibliothekselemente am Beispiel von Fenstern mit Fassadenverzierungen. Die Beispiele aus Fig. 7 sollen insbesondere verdeutlichen, wie die entstehende generalisierte Textur 5 baukastenartig zusammengesetzt wird. Die Figur zeigt links die Rohtexturen und rechts die dazu erzeugte generalisierte Textur. Beispiel a) zeigt ein Fenster mit einem dreiecksförmigen Stuckelement 40a, einem darunter befindlichen rechteckigen Abschnitt 41a und einem Fenstersturz 42a. Außerdem sind säulenförmige Flanken 43a vorhanden. Die Fensterfläche 44a besteht aus einem Fensterkreuz mit geteiltem Oberlicht.

Bei diesem Beispiel ist das Stuckelement 40a bei der generalisierten Textur 5 durch ein Dreieck 40b ersetzt, das teilweise mit einer dunkleren Färbung gefüllt ist, um die Schattenstruktur des Stuckelementes 40a nach zu gestalten. Der Abschnitt 41a ist durch ein Rechteck 41b ersetzt, der links und rechts von dunkleren Abschnitten eingerahmt ist. Der Fenstersturz 42a und die Flanken 43b werden ebenfalls als Rechtecke nachgebildet. Für die Fensterfläche 44b wird gemäß der vorherigen Beschreibung auf ein entsprechendes Bibliothekselement zurückgegriffen. Die Elemente 40b, 41b, 42b, 43b und 44b bilden nunmehr die generalisierte Textur 5 des betreffenden Rohtexturelementes, d.h. des links abgebildeten Fensters.

In dem Beispiel b) weist das Rohtexturelement einfacher gestaltete Flanken 43a auf und eine Fensterfläche 44a, die nur einen Querbalken zeigt. Zusätzlich zu diesen einfachen Merkmalen ist allerdings ein Zierelement 45a aufzufinden, das ein relativ kompliziertes Bildmotiv, in diesem Beispiel einen Löwenkopf, zeigt.

Dieser Löwenkopf stellt ein nicht klassifizierbares Element dar. Das bedeutet, dass entweder seine Struktur nicht durch eine Bilderkennung erfasst werden kann, oder dass für dessen Struktur kein Bibliothekselement existiert. In diesem Fall wird das Bildareal des Löwenkopfes als Bitmap 45b in die rechts abgebildete generalisierte Textur übertragen. Zusammen mit den Bibliothekselementen 43b und 44b bildet das Bitmap 45b die entsprechende generalisierte Textur im Beispiel b) aus Fig. 7 aus. Diese generalisierte Textur bildet gleichsam eine Mischung aus einem Abschnitt des Rohtexturelementes und mehrheitlichen Ersetzungen durch einzelne Bibliothekselemente. Dadurch kann das Rohtexturelement hinreichend genau in die generalisierte Textur überführt werden, wobei das Merkmal des Löwenkopfes erhalten bleibt.

Das Beispiel c) zeigt ein Rohtexturelement in Form eines Fensters mit einem schmucklosen Rahmen und einem keilförmigen Schlussstein 47a in Verbindung mit einer Klinkerfassade 46a. Der Schlussstein bildet in der generalisierten Textur rechts ein Bibliothekselement 47b in Form eines Trapezes. Die Klinkerfassade wurde in einer Mustererkennung klassifiziert und ist hier durch ein Bibliothekselement 46b mit einer entsprechenden Füllstruktur "Mauer" ersetzt.

Konkrete Kombinationen von einzelnen Bibliothekselementen werden zur schnellen Visualisierung / Nutzung der texturierten Modelle zusammengefasst und in speziellen Visualisierungsbibliotheken abgelegt. Eine Visualisierungsbibliothek ist dabei gültig für ein oder für mehrere Projekte.

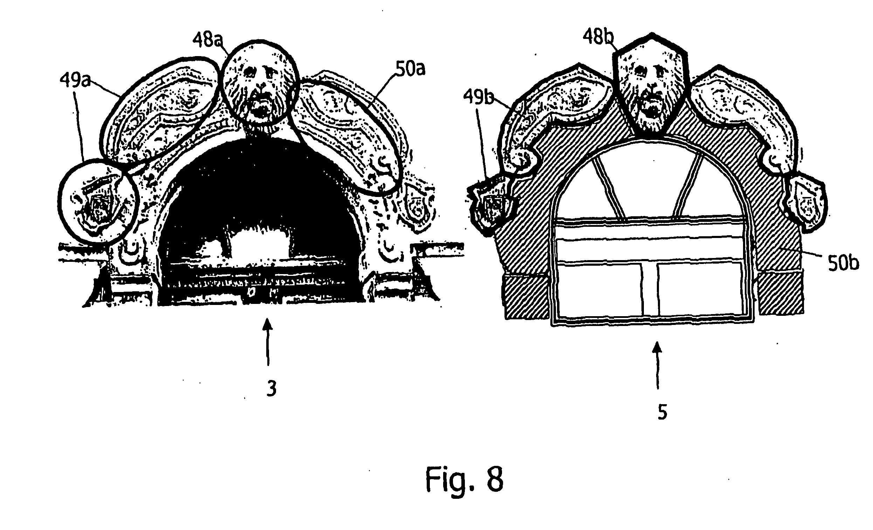

Fig. 8 zeigt ein abschließendes Beispiel für eine Behandlung nicht klassifizierbarer Strukturen in der Rohtextur. Bei diesem Beispiel ist ein Türbogen dargestellt, der einen Löwenkopf in Form einer ersten Rohtextur 48a, verschiedene Ornamente 49a und 50a umfasst. Der Vergleich mit der generalisierten Textur 5 zeigt, dass bei diesem Beispiel die Rohtexturen 48a und 49a als Bitmaps in die generalisierte Textur übertragen worden sind. Die Rohtextur 50a dagegen wurde als Bildabschnitt mit einer einheitlichen Farbfüllung versehen und bildet nun einen Bestandteil 50b der generalisierten Textur. Eine derartige Behandlung nicht klassifizierbarer Rohtexturstrukturen bietet sich vorwiegend dann an, wenn ausgedehnte Bereiche mit speicherintensiven Bildpunktstrukturen nicht klassifizierbar sind und daher das Übertragen dieser Strukturen als Bitmaps zu unverhältnismäßig komplizierten generalisierten Texturen führen würde. In diesem Fall kann beispielsweise ein mittlerer Farb- oder Helligkeitswert des betreffenden Areals ermittelt und als Füllung für das vorgesehene Gebiet der generalisierten Textur verwendet werden.

Anstelle des Ersetzens jedes einzelnen Fassadenelements durch jeweils ein elementares Bibliothekselement kann das Verfahren durch eine Kachelung des virtuellen Objektes beträchtlich vereinfacht werden. Dies bietet sich immer dann an, wenn hochperiodische Fassadenstrukturen nachzubilden sind, wie dies insbesondere bei Plattenbauten und Mietshäusern der Fall ist.

Ein Grund für diese Vorgehensweise ergibt sich aus der formalen Funktionsweise gängiger Visualisierungssoftware sowie aus der Notwendigkeit heraus, die Visualisierungsgeschwindigkeit des texturierten virtuellen Objektes zu steigern, denn die in Echtzeit anzuzeigenden texturierten Modellobjekte müssen bei der Visualisierung in einem dynamischen Prozess aus den Vektordaten der Gebäudekörper und den adressierten Elementen der mitgelieferten Bibliothek zusammengesetzt werden.

Statt dem vorhergehend beschriebenen Ersetzen jeweils einzelner elementarer Bibliothekselemente wird eine Kachelstruktur aus sich wiederholenden Bibliothekselementen erstellt, die die gesamte Oberfläche des texturierten Objektes überdeckt. Das bedeutet insbesondere, dass statt der Einzelmerkmale wie beispielsweise einem Fenster vom Typ A und einer Fassadenfarbe vom Typ B ein angepasstes Wandelement erzeugt wird, dass vereinigte Merkmale aus den Typen A/B enthält. Dieses kombinierte Element füllt durch eine zyklische Wiederholung die texturierte Oberfläche vollständig aus. Diese Vorgehensweise hat sich als sehr effektiv erwiesen.

Natürlich ist bei allen erzeugten generalisierten Texturen bzw. bei der Erstellung der generalisierten Texturen eine Bildnachbearbeitung "von Hand", d.h. unter Verwendung eines Programms zur Bildbearbeitung möglich, um gewisse Ungenauigkeiten auszugleichen. Die generalisierte Textur wird für diesen Zweck in Form eines bekannten Bilddatenformates ausgegeben. Besonders zweckmäßig sind dabei vektorisierte Datenformate, die Skalierungen zulassen. Insbesondere skalierbare SVG-Vektorgrafiken erweisen sich dafür als sehr geeignet.

Das Verfahren wurde anhand von Ausführungsbeispielen erläutert. Im Rahmen fachmännischen Handelns können an den gezeigten Ausführungsbeispielen Veränderungen vorgenommen werden, wobei der Bereich des erfindungsgemäßen Grundgedankens nicht verlassen wird. Weitere Abwandlungen und Ausführungsformen ergeben sich insbesondere aus den Unteransprüchen.

Bezugszeichenliste

| 1 | Fassadenbild |
| 2 | virtuelles dreidimensionales Objekt |
| 3 | Rohtexturelement |
| 4 | Bibliothekselement |
| 5 | generalisierte Textur |
| 31 | Rohtexturelement erstes Gaubenfenster |
| 32 | Rohtexturelement zweites Gaubenfenster |
| 33 | Rohtexturelement erstes Fenster |
| 34 | Rohtexturelement zweites Fenster |
| 35 | Rohtexturelement drittes Fenster |
| 36 | Rohtexturelement mit inhomogener Struktur |
| 37 | Rohtexturelement, Stuck |
| 38 | Rohtexturelement, Stuck |
| 39 | Rohtexturelement, Stuck |
| 40a | Rohtexturelement, Stuckelement, dreiecksförmig |
| 40b | Bibliothekselement, Dreieck mit Farbfüllung |
| 41a | Rohtexturelement, rechteckiger Fenstersturz |
| 41b | Bibliothekselement, Rechteckform |
| 42a | Rohtexturelement, Fenstersturz |
| 42b | Bibliothekselement, Rechteck |
| 43a | Rohtexturelement, Flanke |
| 43b | Bibliothekselement, Rechteck |
| 44a | Rohtexturelement, Fensterfläche mit Fensterkreuz |
| 44b | Bibliothekselement, Fensterfläche mit Kreuz |
| 45a | Rohtextur, Löwenkopf |
| 45b | übertragenes Bitmap, Löwenkopf in generalisierter Textur |

| | |
|---|---|
| 46a | Rohtextur, Klinkerfassade |
| 46b | Bibliothekselement, Füllstruktur Mauer |
| 48a | Rohtextur Löwe |
| 48b | generalisierte Textur, eingefügtes Bitmap |
| 49a | Rohtextur erstes Ornament |
| 49b | generalisierte Textur, eingefügtes Bitmap |
| 50a | Rohtextur zweites Ornament |
| 50b | generalisierte Textur, einheitliche Farbfüllung |

| | |
|---|---|
| b | Rohtexturelement, Breite |
| $h_1$ | Rohtexturelement, Höhe |
| $h_2$ | Rohtexturelement, Höhe Querbalken Fensterkreuz |
| $v_1$ | Rohtexturelement, Verhältnis Breite/Höhe |
| $v_2$ | Rohtexturelement, Verhältnis Querbalkenhöhe/ Gesamthöhe |
| $v_3$ | Rohtexturelement, Fußpunktverhältnis |
| $f_n$ | Rohtexturelement, Farbwert verschiedener Bereiche |
| m | Rohtexturelement, formaler Merkmalsvektor |

| | |
|---|---|
| B | Bibliothekselement, Breite |
| $H_1$ | Bibliothekselement, Höhe |
| $H_2$ | Bibliothekselement, Höhe Querbalken Fensterkreuz |
| $V_1$ | Bibliothekselement, Verhältnis Breite/Höhe |
| $V_2$ | Bibliothekselement, Verhältnis Querbalkenhöhe/ Gesamthöhe |
| $V_3$ | Bibliothekselement, Fußpunktverhältnis |
| $F_n$ | Bibliothekselement, Farbwert verschiedener Abschnitte |
| M | Merkmalsvektor Bibliothekselement |

| | |
|---|---|
| $A_1$ | Verzeichnis hohe Rechteckfenster |
| $A_{11}$ | Fenster mit Oberlicht |
| $A_{12}$ | Fenster, zweigeteilt mit Oberlicht |
| $A_{13}$ | Fenster, zweigeteilt, zweigeteiltes Oberlicht |

| | |
|---|---|
| $A_2$ | Verzeichnis breite Rechteckfenster |
| $A_3$ | Verzeichnis runde Fenster |

| | |
|---|---|
| T | Verzeichnis Türen |
| $T_1$ | Einfachtüren |
| $T_2$ | Doppeltüren |

| | |
|---|---|
| $P_1$ | Strukturverzeichnis rauer Putz |
| $P_2$ | Strukturverzeichnis Klinkerfassade |

**Patentansprüche**

1. Verfahren zur Texturierung virtueller dreidimensionaler Objekte, insbesondere virtueller dreidimensionaler Gebäudeobjekte und Stadtmodelle mit einem fotografischen Abbild (1) eines realen Objektes, insbesondere eines Fassadenfotos, wobei das Verfahren einen Schritt zur Projektion des fotografischen Abbildes (1) auf eine virtuelle Fläche (2) des virtuellen dreidimensionalen Objektes für ein Erstellen einer Rohtextur beinhaltet, und durch folgende Verfahrenschitte **gekennzeichnet**

   - Lokalisieren eines Rohtexturelementes (3) in der Rohtextur durch Anwendung eines Klassifikationsverfahrens,
   - Computergerechte Beschreibung des lokalisierten Rohtexturelementes durch eine formale Merkmalsmenge für das Rohtexturelement, insbesondere einen Merkmalsvektor,
   - Vergleich der formalen Merkmalsmenge des Rohtexturelementes mit je einer Merkmalsmenge vorgegebener Bibliothekselemente (4) und Ermitteln von Ähnlichkeitsmaßen zwischen dem Rohtexturelement und jeweils einem Bibliothekselement,
   - Ersetzen des lokalisierten Rohtexturelementes durch mindestens ein Bibliothekselement bei Vorliegen eines vordefinierten Ähnlichkeitsmaßes,
   - Umformung der Rohtextur in eine generalisierte Textur (5) des virtuellen Objektes mit einem Ersetzen sämtlicher Rohtexturelemente durch Bibliothekselemente.

2. Verfahren nach Anspruch 1,
   **dadurch gekennzeichnet, dass**
   das projizierte fotografische Abbild zum Erzeugen der Rohtextur aus einem georeferenzierten terrestrischen Digitalfoto gewonnen wird.

3. Verfahren nach Anspruch 1,
   **dadurch gekennzeichnet, dass**
   das projizierte fotografische Abbild aus einem Luftbild, insbesondere einer Nadir- oder Schrägsichtaufnahme, gewonnen wird.

4. Verfahren nach einem der Ansprüche 1 bis 3,
   **dadurch gekennzeichnet, dass**
   Bildbearbeitungsschritte für eine Bildverbesserung zur Beseitigung von Störungen der Rohtextur, insbesondere eine Abschwächung und/oder eine Eliminierung nachteiliger Schattenkanten und Unschärfen mittels geeigneter Verfahren ausgeführt werden.

5. Verfahren nach Anspruch 1,
   **dadurch gekennzeichnet, dass**
   das Klassifikationsverfahren zum Lokalisieren des Rohtexturelementes eine Positions-, Form-, Farb-, Flächen- und/oder Kantenerkennung gemäß vorab definierter Suchparameter einschließt, wobei das lokalisierte Rohtexturelement mindestens hinsichtlich seiner Position, Form, Farbe, Flächen- und/oder Kantenstruktur und dergleichen Merkmalen selektiert wird.

**6.** Verfahren nach Anspruch 1 und 5, **dadurch gekennzeichnet, dass** bei skalierungsabhängigen Merkmalen des Rohtexturelementes, insbesondere einer Höhe und Breite und/oder einer Bildpunktanzahl eine Umskalierung des Rohtexturelementes auf eine normierte Vergleichsgröße ausgeführt wird und die normierter Vergleichsgröße ein Bestandteil der formalen Merkmalsmenge des Rohtexturelementes bildet.

**7.** Verfahren nach Anspruch 1 und 5, **dadurch gekennzeichnet, dass** skalierungsunabhängige Merkmale des Rohtexturelementes, insbesondere Farbwerte, eine absolute Vergleichsgröße in der formalen Merkmalsmenge des Rohtexturelementes bilden.

**8.** Verfahren nach einem der vorhergehenden Ansprüche, **dadurch gekennzeichnet, dass** der Vergleich der formalen Merkmalsmenge des Rohtexturelementes und der Merkmalsmenge jeweils eines Bibliothekselementes einen Vergleich der normierten Vergleichsgrößen einschließt, wobei ein Ähnlichkeitstest auf ein unter der Skalierung invariantes Verhältnis zwischen einer ersten normierten Vergleichsgröße und einer zweiten normierten Vergleichsgröße ausgeführt wird.

**9.** Verfahren nach einem der vorhergehenden Ansprüche, **dadurch gekennzeichnet, dass** der Vergleich der formalen Merkmalsmenge des Rohtexturelementes und der Merkmalsmenge jeweils eines Bibliothekselementes einen Vergleich der absoluten Vergleichsgrößen einschließt, wobei ein Test auf eine größtmögliche Übereinstimmung der absoluten Vergleichsgrößen ausgeführt wird.

**10.** Verfahren nach einem der vorhergehenden Ansprüche, **dadurch gekennzeichnet, dass** bei der Ermittlung des Ähnlichkeitsmaßes ein Übereinstimmungsgrad der absoluten Vergleichsgrößen und/oder eine Konstanz des invarianten Verhältnisses ausgewertet wird.

**11.** Verfahren nach einem der vorhergehenden Ansprüche, **dadurch gekennzeichnet, dass** das Ähnlichkeitsmaß vorab definiert wird, wobei alle Bibliothekselemente mit einem innerhalb eines Toleranzbereiches liegenden Ähnlichkeitsmaß als Auswahloptionen für das Rohtexturelement ausgegeben werden.

**12.** Verfahren nach einem der vorhergehenden Ansprüche,

**dadurch gekennzeichnet, dass** das Ersetzen des Rohtexturelementes durch das Bibliothekselement durch ein Ausschneiden der Punktmenge des Rohtexturelementes aus der Rohtextur und ein Einsetzen der Punktmenge des mindestens einen Bibliothekselementes in die Rohtextur ausgeführt wird.

**13.** Verfahren nach Anspruch 12, **dadurch gekennzeichnet, dass** das Ersetzen einen Schritt für eine manuell ausgeführte Nachbearbeitung einschließt.

**14.** Verfahren nach einem der vorhergehenden Ansprüche, **dadurch gekennzeichnet, dass** nicht klassifizierte Abschnitte der Rohtextur als Pixelgruppen, insbesondere Bitmaps, in die generalisierte Textur eingefügt werden.

**15.** Verfahren nach einem der vorhergehenden Ansprüche, **dadurch gekennzeichnet, dass** bei dem Umformen der Rohtextur in die generalisierte Textur mindestens teilweise eine Kachelung des virtuellen Objektes durch ein wiederholtes Einfügen eines angepassten Bibliothekselementes erfolgt.

## Claims

**1.** Method for texturing virtual three-dimensional objects, particularly virtual three-dimensional building objects and city models with a photographic image (1) of a real object, particularly a façade picture, the method comprising a step for projecting the photographic image (1) onto a virtual surface (2) of the virtual three-dimensional object to generate a raw texture, and **characterized by** the following method steps:

- localizing a raw texture element (3) within the raw texture by using a classification method,
- describing the localized raw texture element in a computerized manner by a formal attribute set for the raw texture element, particularly an attribute vector,
- comparing the formal attribute set of the raw texture element with an attribute set of predetermined library elements (4) and determining similarity measures between the raw texture element and a library element,
- replacing the localized raw texture element by at least one library element if a predefined similarity measure exists,
- transforming the raw texture into a generalized texture (5) of the virtual object by replacing all raw texture elements by library elements.

2. Method according to claim 1, **characterized in that** the projected photographic image for generating the raw texture is obtained from a georeferenced terrestrial digital photograph.

3. Method according to claim 1, **characterized in that** the projected photographic image is obtained from an air photograph, particularly a nadir or an oblique aerial photograph.

4. Method according to one of claims 1 to 3, **characterized in that** image processing steps are carried out to improve the image by removing faults in the raw texture, specifically a reduction and/or elimination of disadvantageous shadow edges and blurrings by means of suited methods.

5. Method according to claim 1, **characterized in that** the classification method for localizing the raw texture element includes a detection of position, shape, color, surface and/or edge according to previously defined search parameters, whereby the localized raw texture element is selected at least in view of its position, shape, color, surface and/or edge structure and the like attributes.

6. Method according to claim 1 and 5, **characterized in that** if the attributes of the raw texture element, particularly a height and width and/or a picture element number, are scaling-dependent, the raw texture element is rescaled to a normalized reference quantity and the normalized reference quantity forms a part of the formal attribute set of the raw texture element.

7. Method according to claim 1 and 5, **characterized in that** scaling-independent attributes of the raw texture element, particularly color values, define an absolute reference quantity in the formal attribute set of the raw texture element.

8. Method according to one of the preceding claims, **characterized in that** the comparison of the formal attribute set of the raw texture element with the attribute set of a library element includes a comparison of the normalized reference quantities, with a similarity test being carried out between a first normalized reference quantity and a second normalized reference quantity if the ratio is invariant when being scaled.

9. Method according to one of the preceding claims, **characterized in that** the comparison of the formal attribute set of the raw texture element with the attribute set of a library element includes a comparison of the absolute reference quantities, whereby a test for a greatest possible correspondence of the absolute reference quantities is carried out.

10. Method according to one of the preceding claims, **characterized in that** in the determination of the similarity measure a degree of correspondence of the absolute reference quantities and/or a stability of the invariant ratio is evaluated.

11. Method according to one of the preceding claims, **characterized in that** the similarity measure is defined in advance, with all library elements being outputted as selection alternatives for the raw texture element with a similarity measure lying within a tolerance range.

12. Method according to one of the preceding claims, **characterized in that** the replacement of the raw texture element by the library element is accomplished by cutting the point set of the raw texture element out of the raw texture and inserting the point set of the at least one library element into the raw texture.

13. Method according to claim 12, **characterized in that** the replacement includes a manually performed postprocessing.

14. Method according to one of the preceding claims, **characterized in that** non-classified sections of the raw texture are inserted into the generalized texture as pixel groups, particularly bitmaps.

15. Method according to one of the preceding claims, **characterized in that** during the transformation of the raw texture into the generalized texture a tiling of the virtual object is carried out at least partially by a repeated insertion of an adapted library element.

**Revendications**

1. Procédé pour la texturation d'objets virtuels tridimensionnels, en particulier de bâtiments-objets et de modèles urbains virtuels tridimensionnels avec une image photographique (1) d'un objet réel, en particulier d'une photographie de façade, ledit procédé comprenant une étape consistant à projeter l'image photographique (1) sur une surface virtuelle (2) de l'objet virtuel tridimensionnel pour établir une texture brute, et étant **caractérisé par** les étapes de procédé suivantes :

- localisation d'un élément de texture brute (3) dans la texture brute par application d'un procédé de classification,
- description appropriée pour un ordinateur de l'élément de texture brute localisé par un ensemble de caractéristiques formelles pour l'élément de texture brute, en particulier un vecteur de caractéristiques,
- comparaison de l'ensemble de caractéristiques formelles de l'élément de texture brute avec un ensemble de caractéristiques respectives d'éléments de bibliothèque prédéterminés (4), et détermination de dimensions analogiques entre l'élément de texture brute et un élément de bibliothèque respectif,
- remplacement de l'élément de texture brute localisé par au moins un élément de bibliothèque en présence d'une dimension analogique prédéfinie,
- mise en forme de la texture brute dans une texture généralisée (5) de l'objet virtuel avec un remplacement de la totalité des éléments de texture brute par des éléments de bibliothèque.

2. Procédé selon la revendication 1, **caractérisé en ce que** l'image photographique projetée pour générer la texture brevette est récupérée d'une photographie numérique terrestre avec références géographiques.

3. Procédé selon la revendication 1, **caractérisé en ce que** l'image photographique projetée est récupérée d'une image aérienne, en particulier d'une image prise en observation verticale ou en observation oblique.

4. Procédé selon l'une des revendications 1 à 3, **caractérisé en ce que** des opérations de traitement d'images sont exécutées au moyen d'un procédé approprié pour une amélioration de l'image afin d'éliminer des perturbations de la texture brute, en particulier un affaiblissement et/ou une élimination d'arêtes ombrées et de manques de netteté désavantageux.

5. Procédé selon la revendication 1, **caractérisé en ce que** le processus de classification pour localiser l'élément de texture brute inclut une reconnaissance de position, de forme, de couleurs, de surfaces et/ou d'arêtes selon des paramètres de recherche préalablement définis, dans lequel l'élément de texture brute localisé est sélectionné au moins vis-à-vis de sa position, de sa forme, de ses couleurs, de ses surfaces et/ou de ses arêtes, et de caractéristiques similaires.

6. Procédé selon la revendication 1 et 5, **caractérisé en ce que**, pour des caractéristiques de l'élément de texture brute dépendantes de l'échelle, en particulier d'une hauteur et d'une largeur et/ou d'un nombre de pixels, on exécute une transformation d'échelle de l'élément de texture brute à une taille de comparaison normalisée, et la taille de comparaison normalisée forme un élément constitutif de l'ensemble de caractéristiques formelles de l'élément de texture brute.

7. Procédé selon la revendication 1 et 5, **caractérisé en ce que** des caractéristiques de l'élément de texture brute indépendantes de l'échelle, en particulier des valeurs de couleurs, forment une grandeur de comparaison absolue dans l'ensemble des caractéristiques formelles de l'élément de texture brute.

8. Procédé selon l'une des revendications précédentes, **caractérisé en ce que** la comparaison des ensembles de caractéristiques formelles de l'élément de texture brute et de l'ensemble de caractéristiques d'un élément de bibliothèque respectif inclut une comparaison des grandeurs de comparaison normalisées, et un test de similitude est exécuté sur un rapport invariable sous le facteur d'échelle entre une première grandeur de comparaison normalisée et une seconde grandeur de comparaison normalisée.

9. Procédé selon l'une des revendications précédentes, **caractérisé en ce que** la comparaison de l'ensemble des caractéristiques formelles de l'élément de texture brute et de l'ensemble de caractéristiques d'un élément de bibliothèque respectif inclut une comparaison des grandeurs de comparaison absolues, et on exécute un test relatif à une coïncidence aussi grande que possible des grandeurs de comparaison absolues.

10. Procédé selon l'une des revendications précédentes, **caractérisé en ce que** lors de la détermination de la mesure de similitude on évalue un degré de coïncidence des grandeurs de comparaison absolues et/ou une constance du rapport invariable.

11. Procédé selon l'une des revendications précédentes, **caractérisé en ce que** la mesure de similitude est auparavant définie, et tous les éléments de bibliothèque sont fournis à titre d'option de sélection pour l'élément de texture brute avec une mesure de similitude tombant à l'intérieur d'une plage de tolérances.

12. Procédé selon l'une des revendications précédentes,

**caractérisé en ce que** le remplacement de l'élément de texture brute par l'élément de bibliothèque est exécuté par une découpe de l'ensemble de points de l'élément de texture brute hors de la texture brute et par une mise en place de l'ensemble de points dudit au moins un élément de bibliothèque dans la texture brute.

13. Procédé selon la revendication 12, **caractérisé en ce que** le remplacement inclut une opération pour une reprise exécutée manuellement.

14. Procédé selon l'une des revendications précédentes, **caractérisé en ce que** des tronçons non classifiés de la texture brute sont intégrés à titre de groupe de pixels, en particulier de type "bitmaps", dans la texture généralisée.

15. Procédé selon l'une des revendications précédentes, **caractérisé en ce que** lors de la mise en forme de la texture brute dans la texture généralisée, il se produit au moins partiellement un pavage de l'objet virtuel par introduction répétée d'un élément de bibliothèque adapté.

1

Fig. 1

2

Fig. 2

a)

1

2

b)

3

4

c)

5

Fig. 3

Fig. 4

Fig. 5

EP 2 016 561 B1

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Build-by-Number: Rearranging the Real World to Visualize Novel Architectural Spaces. **BEKINS D. et al.** VISUALIZATION, 2005. VIS 05. IEEE MINNEAPOLIS. IEEE, 23. Oktober 2005, 143-150